# EUROPEAN PATENT APPLICATION

(11) **EP 3 561 008 A1**
(43) Date of publication of application: **30.10.2019**
(21) Application number: 19169815.8
(22) Date of filing: 17.04.2019
(51) Int. Cl.: C09D 11/101, C09D 11/38, C09D 11/322

(54) **UV CURABLE INK FOR MATERIAL JET DEPOSITION**

(30) Priority: 23.04.2018 JP 2018081993
(71) Applicant: Mimaki Engineering Co., Ltd., Tomi-city Nagano 389-0512 (JP)
(72) Inventor: TABAYASHI, Isao, Tomi-city, Nagano 389-0512 (JP)
(74) Representative: Bandpay & Greuter

(57) **Abstract**

Provided is a UV curable ink for material jet deposition satisfying both shape forming speed and strength of a three-dimensional object. A UV curable ink for material jet deposition includes a UV curable compound; a photopolymerization initiator; and inorganic particles dispersed in the ink and having an average particle diameter of 30 nm or smaller.

## Description

### BACKGROUND OF THE INVENTION

### TECHNICAL FIELD

The present invention relates to a UV curable ink for material jet deposition.

### BACKGROUND ART

In methods for producing a three-dimensional object, additive manufacturing methods are included. As one of the additive manufacturing methods, a material jet deposition method for depositing a droplet-like material using an inkjet printing apparatus or the like and sequentially curing the deposited material to form a three-dimensional object having a desired shape is exemplified.

For example, in Patent Literature 1, a three-dimensional object having a desired shape is formed by depositing a UV curable ink with an inkjet apparatus for three-dimensional object production one layer by one layer, and irradiating the deposited ink with ultraviolet rays each time when one layer is formed to cure the deposited UV curable ink. Moreover, in Patent Literature 1, in order to improve mechanical strength of the three-dimensional object, a UV curable ink including particles having a particle diameter of 0.1 µm to 30 µm made of a resin or an inorganic substance (for example, silicon dioxide and aluminum oxide) is used.

Patent Literature 1: Japanese Unexamined Patent Publication No. 2016-101692

### SUMMARY

In order to obtain a high strength three-dimensional object by a conventional material jet deposition method, a UV curable ink that includes the particles having a high proportion in the whole solid content in the UV curable ink is preferably used. An increase in this proportion, however, causes an increase in the viscosity of the UV curable ink. Therefore, ejection of the ink from the nozzle of the three-dimensional object production apparatus may be difficult in the conventional material jet deposition method employing, for example, inkjet. An increase in this proportion even within an ejectable range inhibits transmission of ultraviolet rays in the layer caused by the above-described particles. This causes reduction in the quantity of ultraviolet rays reaching the bottom surface of the layer and thus the layer is required to be irradiated with ultraviolet rays for a long period of time in order to cure the whole layer. Consequently, the UV curable ink having a high proportion of the particles in the whole solid content reduces the shape forming speed of the three-dimensional object.

For example, use of an appropriately diluted UV curable ink with a solvent that can be removed after deposition can prevent the ultraviolet ray irradiation time and ink ejectability from being worsened. The production of the three-dimensional object with the diluted UV curable ink results in increasing the required time for accomplishing the three-dimensional object formation correspondingly compared with the production of the three-dimensional object having the same shape with the undiluted UV curable ink because the volume of the UV curable ink actually ejected by inkjet is increased even when the amount of the solid content in the whole UV curable ink used in the production is the same. Consequently, use of the diluted UV curable ink also results in reducing the shape forming speed of the three-dimensional object.

Examples of methods for offsetting the reduction in the shape forming speed associated with the dilution of the UV curable ink include a method for increasing the thickness of the ink layer deposited by one scanning by, for example, enlarging a nozzle diameter ejecting the UV curable ink. The increase in the thickness of the layer results in inhibiting transmission of ultraviolet rays in the layer caused by the particles described above. This reduces the amount of ultraviolet rays reaching the bottom surface of the layer and irradiation with ultraviolet rays is eventually required for a long period of time in order to cure the whole layer. Consequently, the increase in the thickness of the ink layer deposited in one scanning in the case of using the diluted UV curable ink cannot prevent the shape forming speed of the three-dimensional object from lowering.

Use of a UV curable ink including particles having a low proportion in the whole solid content in the UV curable ink allows the UV curable ink to be suitably ejected from a nozzle without dilution with a solvent or in a small amount of dilution with a solvent. Consequently, the required time for accomplishing the three-dimensional object formation does not increase. However, the proportion of the particles in the completed three-dimensional object is low and thus the strength of the three-dimensional object cannot increase. Namely, trade-off relationship exists between the shape forming speed and strength of the three-dimensional object.

As a result of intensive study, the inventors of the present invention have found that employment of inorganic particles having a predetermined particle diameter as the particles added in the UV curable ink can eliminate the trade-off relationship and have accomplished the present invention.

An object of the present invention is to provide a UV curable ink for material jet deposition that can satisfy both shape forming speed and strength of the three-dimensional object.

A UV curable ink for material jet deposition according to a first aspect of the present invention includes:
a UV curable compound;
a photopolymerization initiator; and
inorganic particles dispersed in the ink and having an average particle diameter of 30 nm or smaller.

The UV curable ink having the above constitution can satisfy both shape forming speed and strength of the three-dimensional object when the ink is used in the material jet deposition method.

The inorganic particles preferably include first inorganic particles improving the strength of the UV-cured product of the UV curable compound.

The UV curable ink having the above constitution can satisfy both shape forming speed and strength of the three-dimensional object when the ink is used in the material jet deposition method. In particular, the strength of the three-dimensional object can be further improved.

The first inorganic particles are preferably coated with an organic coating agent layer.

The UV curable ink having the above constitution can satisfy both shape forming speed and strength of the three-dimensional object when the ink is used in the material jet deposition method. In particular, the strength of the three-dimensional object can be further improved.

The first inorganic particles are preferably colloidal silica.

The UV curable ink having the above constitution can satisfy both shape forming speed and strength of the three-dimensional object when the ink is used in the material jet deposition method. In particular, the strength of the three-dimensional object can be further improved.

The inorganic particles preferably include second inorganic particles that permit transmission of ultraviolet rays used for curing the ink and prevent transmission of at least a part of ultraviolet rays in at least a part of a wavelength region excluding the wavelength region of the ultraviolet rays used for curing the ink in the wavelength region of ultraviolet rays.

The UV curable ink having the above constitution can satisfy both shape forming speed and strength of the three-dimensional object when the ink is used in the material jet deposition method. This UV curable ink also exhibits suitable characteristics such as improvement in product life of the three-dimensional object formed from the UV curable ink.

The second inorganic particles preferably prevent transmission of at least a part of ultraviolet rays having a wavelength region of shorter than 385 nm.

The UV curable ink having the above constitution can satisfy both shape forming speed and strength of the three-dimensional object when the ink is used in the material jet deposition method. This UV curable ink also exhibits suitable characteristics such as improvement in product life of the three-dimensional object formed from the UV curable ink.

The second inorganic particles are preferably one kind of particles selected from the group consisting of zinc oxide, titanium oxide, and cerium oxide.

The UV curable ink having the above constitution can satisfy both shape forming speed and strength of the three-dimensional object when the ink is used in the material jet deposition method. This UV curable ink also exhibits suitable characteristics such as improvement in product life of the three-dimensional object formed from the UV curable ink.

According to the present invention, both of the shape forming speed at the time of producing the three-dimensional object by material jet deposition and the strength of the formed three-dimensional object can be satisfied by eliminating the trade-off relationship.

### BRIEF DESCRIPTION OF THE DRAWING

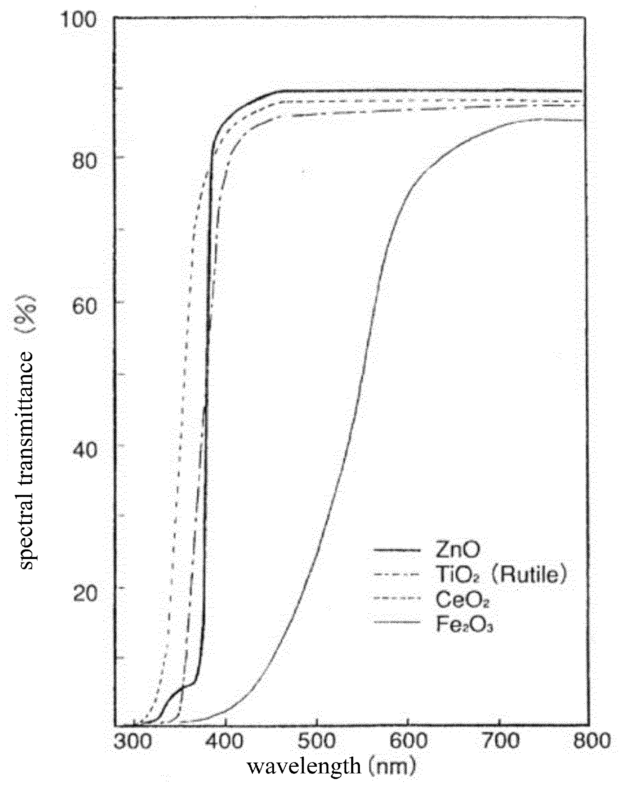

FIG. 1 is a graph illustrating spectral transmittance of inorganic particles. The graph is cited from "Shigaisen Bougyozai tositeno Sanka Aen no Kinou to Kaihatu (Function and Development of Zinc Oxide as Ultraviolet Ray Protection Agent", written by Tadashi Sakurai and Kanehiro Saitou, FRAGRANCE JOURNAL, May 1999, No. 222 (Vol. 27/No. 5), p. 79 to p. 83.

### DESCRIPTION OF EMBODIMENTS

The UV curable ink for material jet deposition according to one embodiment of the present invention (hereinafter, mealy referred to as "this ink") is used in any material jet deposition methods in which the ejected UV curable ink is cured by irradiating the ejected ink with ultraviolet rays. This ink is ejected from the print head of an inkjet printing apparatus onto a working table (or medium) or onto the cured ink layer. Thereafter, the ejected ink is cured with ultraviolet rays emitted from the ultraviolet ray irradiator of the inkjet printing apparatus. Such ejection and curing are repeated to obtain a three-dimensional object having a desired shape from a formed plurality of cured ink layers. Irradiation of ultraviolet rays for curing this ink may be carried out for the whole layer for every ejection of one layer of this ink or may be carried out at the appropriate time of a process in which this ink is ejected for one layer (for example, this ink is irradiated with ultraviolet rays at every one drop or every plurality of drops by allowing the ultraviolet ray irradiator to follow the movement of the print head).

This ink includes the UV curable compound and the inorganic particles.

The inorganic particles may be directly dispersed in the UV curable compound without using a solvent as long as the UV curable compound is in a liquid state where the UV curable compound can be ejected from the print head under a temperature condition (for example, 25°C) during use of the ink by the inkjet printing apparatus.

By contrast, when the UV curable compound has a difficulty in being ejected from the print head under the above-described condition or when reducing thickness of a coating film using this ink is desired, the UV curable compound and the inorganic particles are preferably dissolved or dispersed into a solvent.

### (UV curable compound)

The UV curable compound may be a compound cured by ultraviolet rays having a specific wavelength and emitted from the ultraviolet ray irradiator in the inkjet printing apparatus for material jet deposition. For using a UV-LED lamp as the light source of the ultraviolet rays, the specific wavelength is within the range of 405 nm to 385 nm.

The UV curable compound preferably has a high transparency to the ultraviolet rays having the above-described specific wavelength before curing. For example, the spectral transmittance when this ink is measured at a sample thickness of 32 µm is preferably 90% or higher, 80% or higher, 70% or higher, 60% or higher, 50% or higher, 40% or higher, 30% or r, or 20% or higher. The UV curable compound is particularly preferably colorless.

The UV curable compound is also preferably has a high transparency to the ultraviolet rays having the above-described specific wavelength after curing. For example, the spectral transmittance when this ink is measured at a sample thickness of 32 µm is preferably 90% or higher, 80% or higher, 70% or higher, 60% or higher, 50% or higher, 40% or higher, 30% or higher, or 20% or higher. The UV curable compound is particularly preferably colorless.

Methods for measuring the spectral transmittance have been widely known. For example, the spectral transmittance can be determined by using a UV visible light spectrophotometer "UV-3900H" manufactured by Hitachi High-Technologies Corporation and measuring the double beam standard illuminant D65 spectral transmittance.

Examples of the UV curable compound include (meth)acrylic monomers.

The (meth)acrylic monomers are not particularly limited and widely known (meth)acrylic monomers may be used. Examples of the (meth)acrylic monomers include monofunctional methacrylate having a substituent such as methyl, ethyl, propyl, butyl, amyl, 2-ethylhexyl, isooctyl, nonyl, dodecyl, hexadecyl, octadecyl, cyclohexyl, benzyl, methoxyethyl, butoxyethyl, phenoxyethyl, nonylphenoxyethyl, glycidyl, dimethylaminoethyl, diethylamino ethyl, isobornyl, dicyclopentanyl, dicyclopentenyl, dicyclopentenyloxyethyl, and isobornyl; dimethacrylate of, for example, 1,3-butylene glycol, 1,4-butanediol, 1,5-pentanediol, 3-methyl-1,5-pentanediol, 1,6-hexanediol, neopentyl glycol, 1,8-octanediol, 1,9-nonanediol, tricylodecane dimethanol, ethylene glycol, polyethylene glycol, propylene glycol, dipropylene glycol, tripropylene glycol, and polypropylene glycol; and polyfunctional methacrylate such as dimethacrylate of tris(2-hydroxyethyl)isocyanate, dimethacrylate of diol obtained by adding 4 mol or more of ethylene oxide or propylene oxide to 1 mol of neopentyl glycol, dimethacrylate of diol obtained by adding 2 mol of ethylene oxide or propylene oxide to 1 mol of bisphenol-A, dimethacrylate or trimethacrylate of triol obtained by adding 3 mol or more of ethylene oxide or propylene oxide to 1 mol of trimethylolpropane, dimethacrylate of diol obtained by adding 4 or more of ethylene oxide or propylene oxide to 1 mol of bisphenol-A, trimethylolpropane trimethacrylate, pentaerythritol trimethacrylate, polymethacrylate of di pentaerythritol, ethylene oxide-modified phosphoric acid methacrylate, and ethylene oxide-modified alkyl phosphoric acid methacrylate.

### (Inorganic particles)

The inorganic particles may be any inorganic particles as long as the particles of inorganic substance do not substantially inhibit transmission of the above described ultraviolet rays. For example, the spectral transmittance to the above-described ultraviolet rays when this ink to which the inorganic particles are added is measured at a sample thickness of 32 µm is preferably 90% or higher, 80% or higher, 70% or higher, 60% or higher, 50% or higher, 40% or higher, 30% or higher, or 20% or higher.

The inorganic particles each having a sufficiently smaller particle diameter than the wavelength of the ultraviolet rays (specifically, for example, the inorganic particles having a particle diameter of 1/10 or shorter of the wavelength of the ultraviolet rays) generates Rayleigh scattering when the inorganic particles dispersed in this ink are irradiated with the ultraviolet rays. The scattering coefficient of the inorganic particles at this time is inversely proportional to the fourth power of the wavelength and proportional to the sixth power of the particle diameter. The inorganic particles having a scattering coefficient of sufficiently close to zero are presumed not to substantially inhibit the transmission of the ultraviolet rays. Therefore, the inorganic particles having sufficiently small particle diameter relative to the wavelength of the above described ultraviolet rays allow any inorganic particles not to substantially inhibit curing of the UV curable compound. Therefore, the inorganic particles preferably have the average particle diameter that do not inhibit the transmission of the above described ultraviolet rays and, for example, preferably have an average particle diameter of 30 nm or smaller and particularly preferably have an average particle diameter of 10 nm to 20 nm.

In this specification, the average particle diameter is a volume average particle diameter determined by a dynamic light scattering method. The volume average particle diameter can be measured by using a dynamic light scattering Nanotrack particle size analyzer (Nanotrac UPA-EX150, manufactured by Microtrac).

In order to facilitate dispersion of the inorganic particles in this ink, the surface of the inorganic particles may be treated. For example, surface treatment with an organic coating agent such as treatment with a silane coupling agent may be carried out.

Examples of the main components of the inorganic particles include silicon dioxide (SiO₂) (in particular, colloidal silica), zinc oxide (ZnO), titanium oxide (TiO₂), and cerium oxide (CeO₂). Of these main components, cerium oxide is particularly preferable from the viewpoint of less inhibition of the effect during ultraviolet ray irradiation and reduction in degradation caused by ultraviolet rays such as sunlight.

The inorganic particles are included in this ink to such an extent that the strength of this ink at the time of ultraviolet ray curing is improved and/or to such an extent that shrinkage of this ink at the time of ultraviolet ray curing is prevented or reduced. For example, the inorganic particles are preferably included in the range of 10% by weight to 20% by weight.

The inorganic particles are particularly preferably inorganic particles not functioning as a polymerization inhibitor.

### (Solvent)

For use of the solvent, which is optional, any solvents commonly used for the UV curable ink for material jet deposition may be used as long as the solvent can dissolve or disperse the UV curable compound and the inorganic particles.

Preferably, the solvent does not substantially inhibit curing the UV curable compound by the above-described ultraviolet rays. For example, the spectral transmittance to the above described ultraviolet rays when this ink to which the solvent is added is measured at a sample thickness of 32 µm is preferably 90% or higher, 80% or higher, 70% or higher, 60% or higher, 50% or higher, 40% or higher, 30% or higher, or 20% or higher.

Examples of the solvent include water and organic solvents.

### (Other components)

In addition to the UV curable compound and the inorganic particles, this ink may include any components commonly used in the UV curable ink for material jet deposition. Examples of other components include a photopolymerization initiator, a sensitizer, a polymerization inhibitor, a preservation stabilizer, an antioxidant, a coloring agent, an ultraviolet ray absorber, a light stabilizer, a chain transfer agent, and a filler. Hereinafter, the photopolymerization initiator, the sensitizer, and the polymerization inhibitor will be particularly described.

As the photopolymerization initiator, a radical polymerization type photopolymerization initiator may be used.

Examples of the radical polymerization type photopolymerization initiator include benzoin isobutyl ether, 2,4-diethylthioxanthone, 2-isopropylthioxanthone, benzil, 2,4,6-trimethylbenzoyl diphenylphosphine oxide, 6-rimethylbenzoyl diphenylphosphine oxide, 2-benzyl-2-dimethylamino-1-(4-morpholinophenyl)-butan-1-one, and bis(2,6-dimethoxybenzoyl)-2,4,4-trimethylpentylphosphine oxide. In addition to the above examples, molecular cleavage type photopolymerization initiators such as 1-hydroxycyclohexyl phenyl ketone, benzoin ethyl ether, benzyl dimethyl ketal, 2-hydroxy-2-methyl-1-phenylpropan-1-one, 1-(4-isopropylphenyl)-2-hydroxy-2-methylpropan-1-one, and 2-methyl-1-(4-methylthiophenyl)-2-morpholinopropan-1-one are employed. Hydrogen abstraction type photopolymerization initiators such as benzophenone, 4-phenylbenzophenone, isophthalphenone, and 4-benzoyl-4'-methyldiphenyl sulfide may be also employed. These photopolymerization initiators may be used singly or in combination of several kinds of these photopolymerization initiators.

When a UV-LED lamp is used as a light source of ultraviolet rays with which this ink is irradiated for curing, the photopolymerization initiator is preferably selected in consideration of photoemission peak wavelength of the UV-LED. Examples of the photopolymerization initiator suitable for the use of the UV-LED include 2-benzyl-2-dimethylamino- 1 -(4-morpholinophenyl)-butan-1 -one, 2-(dimethylamino)-2-[(4-methylphenyl)methyl]-1-(4-morpholinophenyl)-butan-1-one, bis(2,4,6-trimethylbenzoyl)phenylphosphine oxide, 2,4,6-trimethylbenzoyl-diphenyl-phosphine oxide, 2,4-diethylthioxanthone, and 2-isopropylthioxanthone.

As the sensitizer for the photopolymerization initiator, for example, amines that do not cause addition reaction with the polymerizable components such as trimethylamine, methyl diethanolamine, triethanolamine, p-diethylaminoacetophenone, ethyl p-dimethylaminobenzoate, isoamyl p-dimethylaminobenzoate, N,N-dimethylbenzylamine, and 4,4'-bis(diethylamino)benzophenone may be used together with the photopolymerization initiator.

Into this ink, in order to improve storage stability of this ink, polymerization inhibitors such as hydroquinone, methoquinone, di-t-butylhydroquinone, p-methoxyphenol, butylhydroxytoluene, and nitrosamine salts may be added in the range of 0.01% by mass to 2% by mass in this ink.

### (Effect caused by this ink)

When a conventional UV curable ink is used for material jet deposition, there is trade-off relationship between the shape forming speed and strength of the three-dimensional object. For example, an increase in the amount of the particles such as the inorganic particles in the conventional UV curable ink in order to improve strength of the three-dimensional object causes reduction in the shape forming speed, whereas a decrease in the amount of the particles such as the inorganic particles in the conventional UV curable ink in order to increase the shape forming speed causes reduction in the strength. An increase in the thickness of the ink layer deposited by one scanning aiming to increase the shape forming speed of the three-dimensional object causes transmission of ultraviolet rays to the lower part of the ink layer to be inhibited by the particles. Consequently, the irradiation time of ultraviolet rays is required to be long and thus the shape forming speed cannot increase. Therefore, both shape forming speed and strength of the three-dimensional object are difficult to satisfy when the conventional UV curable ink is used. Addition of the particles to the conventional UV curable ink may cause curing trouble due to low transparency to ultraviolet rays.

By contrast, this ink has the inorganic particles to be added having sufficiently small particle diameter and excellent transparency to the ultraviolet rays. Therefore, the ultraviolet rays sufficiently reach deep layers and each layer can be cured by the ultraviolet rays during relatively short time even when the content of the inorganic particles in this ink is increased more than the content in the conventional ink or the thickness of each layer is increased more than the thickness of the conventional ink. Therefore, production of the object by material jet deposition using this ink allows the shape forming speed to be fast and the strength of the three-dimensional object to be high. In addition, there is no possibility of curing defects in the production of the object by material jet deposition using this ink.

In this ink, the inorganic particles act as a nonvolatile filler and thus a degree of shrinkage is reduced compared with the shrinkage of an ink not including the inorganic particles. Therefore, the three-dimensional object having a desired height can be formed by only deposition of layers in which the number of layers is the same as the number of layers in the case of an ideal state where no shrinkage occurs or the number of layers is close to the numbers of layers in the case of the ideal state. This allows the three-dimensional object to be suitably produced in a state of, for example, the reduced amount of the ink to be consumed, the improved shape forming speed, and/or shortened production time.

### (Modification Example 1)

In the above-described embodiment, any inorganic particles are used. However, the inorganic particles that improve the strength (or elasticity) of the UV-cured product of this ink are preferably used. This allows the strength of the whole three-dimensional object prepared by using this ink to be improved.

Further preferably, such inorganic particles bond to the UV curable compound in the ultraviolet ray curing reaction process (for example, a radical polymerization process) of the UV curable compound, do not react with the UV curable compound before the ultraviolet ray curing reaction (for example, during storage), and do not exhibit significant association effect with the UV curable compound (for example, do not exhibit association of the UV curable compound and the inorganic particles, in which the association would lead to viscosity increase generating difficulty in ejecting the ink from the print head of the inkjet printing apparatus). Examples of such inorganic particles include particles of silicon dioxide (for example, colloidal silica) and particles provided with the organic coating agent layer by carrying out organic coating agent treatment (for example, silane coupling agent treatment) to any inorganic particles (for example, silicon dioxide particles). Such inorganic particles improve the strength (or elasticity) of UV-cured product of this ink by incorporating the inorganic particles into the network of a polymer during the ultraviolet ray curing reaction process. Consequently, the strength of the whole three-dimensional object prepared by using this ink is also improved.

### (Modification Example 2)

In the above-described embodiment, any inorganic particles are used. However, inorganic particles that permit transmission of the ultraviolet rays used for curing this ink and prevent transmission of at least a part of the ultraviolet rays in at least a part of a wavelength region excluding the wavelength region of the ultraviolet rays used for curing the ink in the wavelength region of ultraviolet rays are preferably used. This prevents degradation, such as yellowing, of the three-dimensional object prepared by using this ink and caused by ultraviolet rays and can eventually improve the product life.

Such inorganic particles preferably have a whole spectral transmittance to the ultraviolet rays in the wavelength region, which are prevented from transmitting, of 20% or lower, 10% or lower, 5% or lower, or 1% or lower when this ink to which the inorganic particles are added is measured at a sample thickness of 32 µm.

For example, when the ultraviolet rays having a wavelength region of 405 nm to 385 nm are used for curing this ink, the inorganic particles that prevents transmission of a part of the ultraviolet rays having a wavelength region of less than 385 nm are preferably used. Examples of such inorganic particles include inorganic particles of zinc oxide (ZnO), titanium oxide (TiO₂), or cerium oxide (CeO₂). FIG. 1 illustrates the result of the measurement of the spectral transmittance of these inorganic particles by forming a film including the inorganic particles in a filler ratio of 60% and having a dry thickness of 4 µm on a polyethylene terephthalate film. As illustrated in FIG. 1, the films using these inorganic particles transmit the ultraviolet rays having a wavelength region of 405 nm to 385 nm to a sufficient degree for curing the UV curable compound. However, the films hardly transmit the ultraviolet rays having a wavelength region of shorter than 385 nm.

For example, when any one of near-ultraviolet rays such as UV-A (wavelength 380 nm to 315 nm), UV-B (wavelength 315 nm to 280 nm), and UV-C (wavelength 280 nm to 200 nm) is used for curing this ink, inorganic particles partially or fully preventing transmission of other ultraviolet rays are preferably used. Specifically, when UV-B is used for curing this ink, the inorganic particles partially or fully preventing transmission of UV-A and UV-C are preferably used.

### (Modification Example 3)

The inorganic particles may separately include the inorganic particles described in Modification Example 1 and the inorganic particles described in Modification Example 3. The inorganic particles may also include inorganic particles that satisfy both Modification Example 1 and Modification Example 2. For example, the inorganic particles may include particles formed by carrying out the organic coating agent treatment described in Modification Example 1 to the inorganic particles described in Modification Example 2.

### (Modification Example 4)

In the above-described embodiment and Modification Examples, the (meth)acrylic monomers are exemplified as the UV curable compound. The UV curable compound, however, is not limited to the (meth)acrylic monomers. The UV curable compound that is conventionally difficult to use in the material jet deposition method due to high viscosity may also be used. The viscosity increase due to using such a UV curable compound can be reduced to such an extent that the ink can be ejected from the nozzle of the inkjet printing apparatus by using the above-described solvent. The material shrinkage during the ultraviolet ray curing caused by using the solvent may be reduced by the inorganic particles acting as the nonvolatile filler (the above-described embodiment) or the reinforcing material of the polymer network (Modification Example 1).

### (Modification Example 5)

In the above-described embodiment and Modification Examples, the case of using the inkjet printing apparatus is exemplified. The apparatus used for the material jet deposition method, however, is not limited to the inkjet printing apparatus and any material jet deposition apparatuses that can be used in the material jet deposition method using the UV curable ink can be used. In other words, this ink can be adequately adjusted to not only the inkjet printing apparatus but also such a material jet deposition apparatus. For example, characteristics such as viscosity of this ink may be optimized not for the nozzle of the print head of the inkjet printing apparatus but for any nozzles of the above-described material jet deposition apparatuses.

Various embodiments and modifications are possible without departing from the scope of the present invention. In addition, the above-described embodiments are only for describing the present invention and do not limit the scope of the present invention. Namely, the scope of the present invention is determined not by the embodiments but by the claims. Various modifications that are made within the scope of the claims and within the meaning of the invention equivalent thereto are considered to be within the scope of the present invention.

## Claims

1. A UV curable ink for material jet deposition comprising:
a UV curable compound;
a photopolymerization initiator; and
inorganic particles dispersed in the ink and having an average particle diameter of 30 nm or smaller.

2. The ink according to claim 1, wherein the inorganic particles comprise first inorganic particles improving the strength of the UV-cured product of the UV curable compound.

3. The ink according to claim 2, wherein the first inorganic particles are coated with an organic coating agent layer.

4. The ink according to claim 2 or 3, wherein the first inorganic particles are colloidal silica.

5. The ink according to any one of claim 1 to 4, wherein the inorganic particles comprise second inorganic particles that permit transmission of ultraviolet rays used for curing the ink and prevent transmission of at least a part of ultraviolet rays in at least a part of a wavelength region excluding the wavelength region of the ultraviolet rays used for curing the ink in the wavelength region of ultraviolet rays.

6. The ink according to claim 5, wherein the second inorganic particles prevent transmission of at least a part of ultraviolet rays having a wavelength region of shorter than 385 nm.

7. The ink according to claim 5 or 6, wherein the second inorganic particles are one kind of particles selected from the group consisting of zinc oxide, titanium oxide, and cerium oxide.
